## Europäisches Patentamt

## European Patent Office

## Office européen des brevets

(11) Veröffentlichungsnummer: **0 255 470**
**A2**

(12) **EUROPÄISCHE PATENTANMELDUNG**

(21) Anmeldenummer: 87730083.0

(22) Anmeldetag: 23.07.87

(51) Int. Cl.⁴: **B 60 C 27/06**

(30) Priorität: 28.07.86 DE 3625416

(43) Veröffentlichungstag der Anmeldung:
03.02.88 Patentblatt 88/05

(84) Benannte Vertragsstaaten: **AT CH DE IT LI**

(71) Anmelder: **RUD-Kettenfabrik Rieger & Dietz GmbH u.
Co.
Friedensinsel
D-7080 Aalen 1 (DE)**

(72) Erfinder: **Heid, Reiner, Dipl.-Ing. (FH)
Hegelstrasse 40
D-7080 Aalen (DE)**

**Ruf, Anton
Waldhäuser Strasse 36
D-7080 Aalen-Unterkochen (DE)**

(74) Vertreter: **Böning, Manfred, Dr. Ing. et al
Patentanwälte Dipl.-Ing. Dieter Jander Dr. Ing. Manfred
Böning Kurfürstendamm 66
D-1000 Berlin 15 (DE)**

(54) Reifenkette, insbesondere Gleitschutzkette.

㊞ Bei einer Reifenkette, insbesondere einer Gleitschutzkette für Fahrzeugreifen mit in Reifenumfangsrichtung verlaufenden Kettensträngen (2,3) werden die Kettenstränge (2,3) durch Querstäbe (4) im Abstand voneinander gehalten. Die Querstäbe (4) bestehen aus Teilstäben (9,10), welche im Bereich warzenartiger Vorsprünge (13, 14) durch Schweißen miteinander verbunden sind. In den Teilstäben (9,10) paarweise angeordnete Ausnehmungen (15,16) umschließen die Schenkel (17,18) von Kettengliedern (19,20) der Kettenstränge (2,3), und zwar vorzugsweise mit leichtem Spiel.

Fig.2 Fig.3

EP 0 255 470 A2

**Beschreibung**

Reifenkette, insbesondere Gleitschutzkette

Die Erfindung betrifft eine Reifenkette, insbesondere Gleitschutzkette, für Fahrzeugreifen mit in Reifenumfangsrichtung verlaufenden Kettensträngen bzw. Kettenstrangabschnitten, welche durch Querstäbe miteinander verbunden sind, die sie zumindest auf einem Teil ihrer Länge im Abstand voneinander halten.

Bekannt ist eine als Gleitschutzkette ausgebildete Reifenkette der vorstehenden Art, bei der die in Reifenumfangsrichtung verlaufenden Kettenstränge bzw. Kettenstrangabschnitte von Bügeln gehalten werden, die schwenkbar an Armen gelagert sind, welche die Bügel unter Federkrafteinwirkung, in Achsrichtung betrachtet, auf die Lauffläche des Reifens drücken (DE-GS 85 36 092). Die Querstäbe dienen bei dieser Reifenkette einerseits dazu, die zwischen jeweils aufeinanderfolgenden Bügeln gelegenen Kettenstrangabschnitte im Abstand voneinander zu halten, andererseits haben sie die Aufgabe, Vortriebskräfte vom Reifen auf die Fahrbahn zu übertragen, d.h. sie erfüllen insoweit die Funktion von Querketten einer Leiterkette und sollten daher über eine hinreichende Griffigkeit verfügen. Diese läßt sich dadurch realisieren, daß man ihnen die Form schmaler länglicher, vorzugsweise zumindest fahrbahnseitig mit Stollen versehener Platten gibt, welche durch die mit ihnen verbundenen Kettenglieder in einer möglichst aufrechten Stellung gegenüber der Lauffläche des Reifens gehalten werden. Um die Querstäbe mit den ihnen zugeordneten Kettengliedern zu verbinden, sind die Enden der bekann ten Querstäbe gabelförmig ausgebildet und die Schenkel der jeweiligen Kettenglieder zwischen den beim Zusammenbau der Kette zusammengedrückten Zinken der Gabel eingeklemmt. Die bekannte Konstruktion vermag insofern nicht voll zu befriedigen, als die während des Einsatzes der Reifenkette wirksam werdenden Kräfte die Gabelzinken auseinanderzubiegen suchen. Die Folge hiervon ist, daß es zur Lockerung der Klemmverbindung und in ungünstigen Fällen sogar zum Abbrechen zumindest einer der Zinken eines Zinkenpaares kommt. Das Auseinanderdrücken der Zinken wird dabei noch durch Spreizkräfte gefördert, die von den Kettengliedern herrühren, die in das von den Gabelzinken umschlossene Kettenglied eingehängt sind. Die Buge dieser Kettenglieder wirken nämlich wie Spreizkeile, die bei rotierendem Reifen ständig in den Spalt zwischen den Gabelzinken geschlagen werden und diese nicht nur aufzubiegen suchen, sondern an den Berührungsstellen selbst auf Verschleiß beansprucht werden.

Der Erfindung liegt die Aufgabe zugrunde, eine Reifenkette der gattungsgemäßen Art derart weiterzuentwickeln, daß die Gewähr für eine sichere und dauerhafte Verbindung zwischen den Querstäben des Laufnetzes und dessen Kettensträngen bzw. Kettenstrangabschnitten gegeben ist. Diese Aufgabe wird erfindungsgemäß dadurch gelöst, daß die Querstäbe aus zwei im Bereich warzenförmiger Vorsprünge durch Schweißen miteinander verbundenen Teilstäben bestehen, welche an ihren einander zugewandten Schmalseiten mit paarweise angeordneten Ausnehmungen versehen sind, die im zusammengefügten Zustand die Schenkel von parallel zur Reifenlauffläche orientierten Kettengliedern im wesentlichen voll umschließen.

Die erfindungsgemäße Reifenkette bietet den Vorteil, daß die Form der Querstäbe durch Kombination unterschiedlich geformter Teilstäbe in weiten Grenzen variiert und auf die Aufbringung vergleichsweise hohe Kräfte erfordernder Biegevorgänge beim Zusammenbau der Kette verzichtet werden kann. Stattdessen findet eine Elektrostumpfschweißung im Bereich der warzenförmigen Vorsprünge der beiden Teilstäbe statt. Die Vorsprünge können dabei so ausgebildet sein, daß der beim Schweißen entstehende Grat weder über die Außenkontur der Querstäbe vorsteht noch in die Ausnehmungen für die Schenkel der von den Querstäben umfaßten Kettenglieder ragt. Trotz vergleichsweise großer Flächen der Schmalseiten der Teilstäbe ergeben sich auf den Bereich der warzenförmigen Vorsprünge begrenzte kleine Berührungsflächen zwischen den Teilstäben, und der auf die kleinen Berührungszonen konzentrierte Schweißstrom bleibt in aus Gründen der Energieeinsparung erwünschten engen Grenzen. Dadurch, daß Abschnitte der Teilstäbe in das Innere des von ihnen umschlossenen Kettengliedes ragen, besteht keine Gefahr eines Aufspaltens der Querstäbe durch die Buge der in das jeweils von einem Querstab umschlossene Kettenglied eingehängten Kettenglieder.

Weitere Merkmale und Einzelheiten der Erfindung ergeben sich aus den Unteransprüchen und der Beschreibung eines in der beigefügten Zeichnung dargestellten bevorzugten Ausführungsbeispieles der Erfindung. Es zeigen:

Fig. 1 eine perspektivische Ansicht eines Teiles einer auf einen Reifen aufgezogenen Gleitschutzkette,

Fig. 2 die Draufsicht auf einen Teil des Netzes der Gleitschutzkette gemäß Fig. 1,

Fig. 3 in vergrößertem Maßstab zwei einen Querstab bildende Teilstäbe vor der Schweißverbindung und

Fig. 4 die in Fig. 3 dargestellten Teilstäbe nach dem Zusammenschweißen zu einem Querstab.

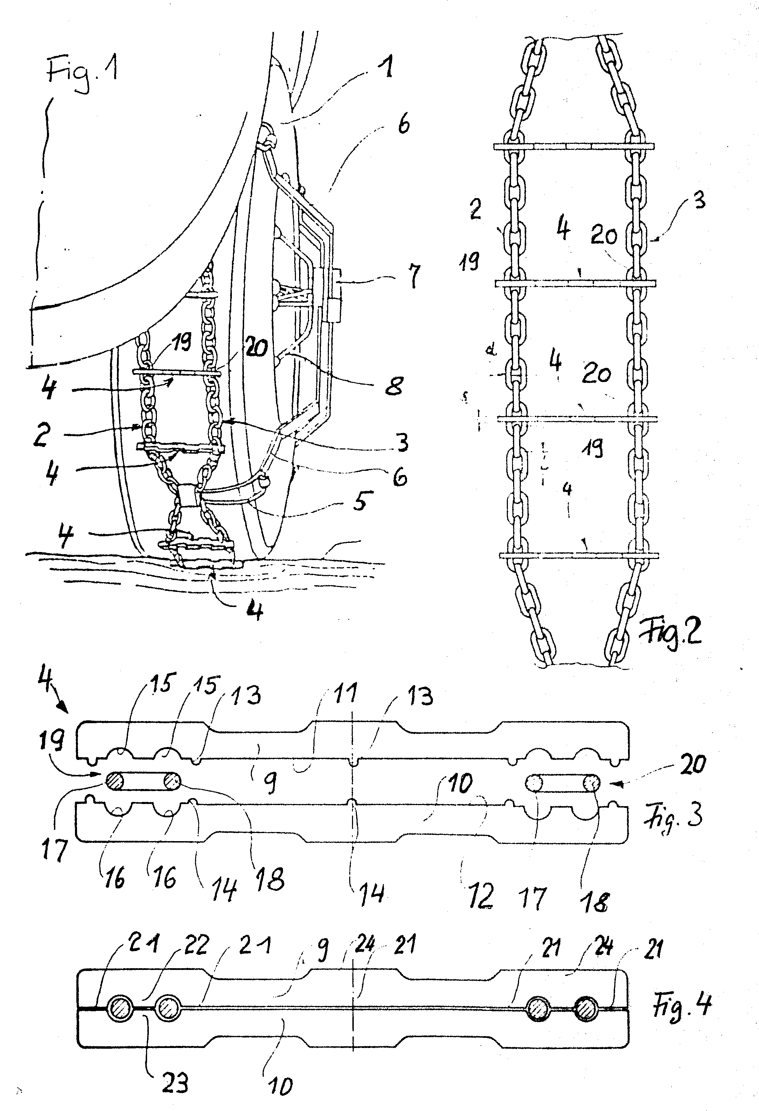

In Fig. 1 ist 1 der Reifen eines Fahrzeuges, auf dem eine Gleitschutzkette aufgezogen ist. Das Laufnetz der Gleitschutzkette wird von Kettensträngen 2 und 3 und diese miteinander verbindenden Querstäben gebildet. Zur Halterung des Laufnetzes dienen Bügel 5, die schwenkbar in den Enden von Armen 6 angeordnet sind. Die Arme 6 sind in einem Gehäuse 7 geführt, das eine Drehbewegung der Arme 6 gegenüber dem Reifen 1 zuläßt. Federelemente 8 ziehen das Gehäuse 7 in Richtung der Reifenachse und halten die Arme 6, die Bügel 5 und das Laufnetz in der dargestellten Position.

Einzelheiten des Aufbaus der Querstäbe ergeben sich aus den Figuren 3 und 4. Man erkennt, daß jeder Querstab aus zwei Teilstäben 9 und 10 besteht. Die Teilstäbe 9 und 10 weisen an ihren einander zugewandten Schmalseiten 11 und 12 warzenartige Vorsprünge 13 und 14 auf und sind außerdem mit paarweise angeordneten Ausmehmungen 15 bzw. 16 versehen. Die Ausnehmungen 15,16 umschließen im zusammengeschweißten Zustand der Teilstäbe 9 und 10 die Schenkel 17,18 von Kettengliedern 19 und 20 der Kettenstränge 2 und 3, wie dies aus Fig. 4 erkennbar ist, die ebenfalls zeigt, daß die Schweißstellen 21 auf kurze Abschnitte der Schmalseiten 11 und 12 der Teilstäbe 9 und 10 begrenzt sind. In folge der zwischen die Ausnehmungen 15, 16 ragenden Stege 22, 23 der Teilstäbe 9 und 10 ist ein Auseinandertreiben der Teilstäbe 9 und 10 durch die Buge von Kettengliedern, die in die Kettenglieder 19,20 eingehängt sind, nicht möglich.

Zur Erhöhung der Griffigkeit der Querstäbe sind diese in an sich bekannter Weise mit Stollen 24 versehen.

Die Stärke s der Querstäbe 4 sollte so gewählt sein, daß das Spiel zwischen den in das den jeweiligen Querstab 4 trangende Kettenglied 19 bzw. 20 eingehängten Kettengliedern der Kettenstränge 2 und 3 und dem jeweiligen Querstab vergleichsweise gering ist. In der Praxis wählt man die Stärke s der Querstäbe 4 etwa 10 bis 20% kleiner als die Differenz aus der Teilung t der Kettenglieder 19, 20 und deren zweifacher Nenndicke d.

## Patentansprüche

1. Reifenkette, insbesondere Gleitschutzkette für Fahrzeugreifen, mit in Reifenumfangsrichtung verlaufenden Kettensträngen (2,3) bzw. Kettenstrangabschnitten, welche durch Querstäbe (4) miteinander verbunden sind, die sie zumindest auf einen Teil ihrer Länge im Abstand voneinander halten, dadurch gekennzeichnet, daß die Querstäbe (4) aus zwei im Bereich warzenförmiger Vorsprünge (13,14) durch Schweißen miteinander verbundenen Teilstäben (9,10) bestehen, welche an ihren einander zugewandten Schmalseiten (11,12) mit paarweise angeordneten Ausnehmungen (15,16) versehen sind, die in zusammengefügten Zustand die Schenkel (17, 18) von parallel zur Reifenlauffläche orientierten Kettengliedern (19,20) im wesentlichen voll umschließen.

2. Reifenkette nach Anspruch 1, dadurch gekennzeichnet, daß die Ausnehmungen (15,16) der Teilstäbe (9,10) halbkreisförmig sind.

3. Reifenkette nach Anspruch 1 oder 2, dadurch gekennzeichnet, daß die Teilstäbe (9,10) mindestens jeweils beidseits der paarweise angeordneten Ausnehmungen (15,16) mit sich gegenüberliegenden warzenförmigen Vorsprüngen (13,14) versehen sind.

4. Reifenkette nach einem der Ansprüche 1 bis 4, dadurch gekennzeichnet, daß die Teilstäbe (9,10) im Bereich ihrer Mitte mindestens einer warzenartigen Vorsprung (13,14) aufweisen.

5. Reifenkette nach einem der Ansprüche 1 bis 4, dadurch gekennzeichnet, daß die Querstäbe (4) von länglichen schmalen Platten gebildet werden.

6. Reifenkette nach einem der Ansprüche 1 bis 5, dadurch gekennzelchnet, daß die Stärke (s) der Querstäbe (4) 10 - 20% kleiner ist als die Differenz aus der Teilung t der Kettenglieder (19,20) und deren zweifacher Nenndicke d.

7. Reifenkette nach einem der Ansprüche 1 bis 6, dadurch gekennzeichnet, daß die Teilstäbe (9,10) als flache Stanzteile ausgebildet sind.

8. Reifenkette nach einem der Ansprüche 1 bis 7, dadurch gekennzeichnet, daß die von den Querstäben (4) umschlossenen Schenkel (17,18) der Kettenglieder (19,20) mit Spiel in den Ausnehmungen (15,16) gelagert sind.

9. Reifenkette nach einem der Ansprüche 1 bis 8, dadurch gekennzeichnet, daß die Querstäbe (4) mindestens fahrbahnseitig mit Stollen (24) versehen sind.

0255470

Fig.1

Fig.2

Fig.3

Fig.4